# EUROPÄISCHE PATENTSCHRIFT

(11) **EP 0 607 948 B1**
(45) Veröffentlichungstag und Bekanntmachung des Hinweises auf die Patenterteilung: **31.07.1996**
(21) Anmeldenummer: 94100731.2
(22) Anmeldetag: 19.01.1994
(51) Int. Cl.: A47J 17/10, A23N 7/00

(54) **Vorrichtung zum Halten von Früchten, insbesondere von Mangofrüchten während des Schälens und Zerkleinerns**
Device for holding fruits, in particular mangos, during peeling and cutting
Dispositif pour tenir des fruits, en particulier des mangues, durent l'épluchage et le découpage

(30) Priorität: 19.01.1993 DE 9300621 U
(43) Veröffentlichungstag der Anmeldung: 27.07.1994
(73) Patentinhaber: Raithel, Wolfgang, D-71665 Vaihingen/Enz-Riet (DE)
(72) Erfinder: Raithel, Wolfgang, D-71665 Vaihingen/Enz-Riet (DE)
(74) Vertreter: von Bülow, Tam, Dr.

(56) Entgegenhaltungen:
- CH-A- 320 245
- DE-A- 3 336 481
- DE-A- 3 929 293
- DE-U- 8 713 622
- FR-A- 2 393 509
- FR-A- 2 500 782
- US-A- 2 073 546
- US-A- 3 465 437

## Beschreibung

Die Erfindung bezieht sich auf eine Vorrichtung zum Halten von Früchten, insbesondere von Mangofrüchten, während des Schälens und Zerkleinerns. Manche Früchte, wie insbesondere Mangofrüchte, haben sehr weiches Fruchtfleisch, das jedoch relativ fest an einem härteren Kern haftet und das außen von einer relativ zähen Schale umgeben ist. Damit ist es sehr mühsam, diese Frucht zu schälen und zu zerkleinern, da das sehr weiche Fruchtfleisch ein Halten in der Hand nahezu unmöglich macht und andererseits der relativ harte Kern nicht gestattet, daß die Frucht beispielsweise von einer Gabel gehalten wird. Erschwerend kommt hinzu, daß sich das Fruchtfleisch nur sehr schwer vom Kern lösen läßt. Somit kommt es neben den beschriebenen Mühen oftmals auch zu Schnittverletzungen.

Eine Vorrichtung zum Halten von Früchten während des Schälens und Zerkleinerns gemäß dem Oberbegriff des Anspruchs 1 ist aus DE-U-8713622 bekannt.

Die FR-A-25 00 782 zeigt eine Vorrichtung zum Schneiden von Früchten zu spiraligen Streifen und besteht aus einem Handgriff, einem daran angebrachten Messer und einem an der Spitze des Messers angebrachten schraubenartigen Werkzeug, das mit einem selbstschneidenden Gewinde versehen ist und im Bereich seines freien Endes konisch spitz zulaufend ausgebildet ist. Das schraubenartige Werkzeug wird beim Eindrehen in die Frucht langsam vorgeschoben und nimmt damit auch das Messer mit, welches vom Benutzer in einer kreisförmigen Bewegung um die Mittelachse der zu schneidenden Frucht entsprechend der Steigung des Gewindes vorgeschoben wird.

Eine ähnliche Vorrichtung ist auch aus der FR-A-23 93 509 bekannt.

Die DE-A1-39 29 293 zeigt eine Küchenhilfe zum Festspannen von Früchten mit einem Gestell aus einem horizontalen und einem vertikalen Schenkel, wobei an dem vertikalen Schenkel ein Dorn zum Aufspießen von zu schälenden Kartoffeln und ein Besteckgabelkopf vorgesehen sind, die in horizontaler Ausrichtung von dem senkrechten Schenkel abstehen. Der Dorn ist dabei als übliche Holzschraube ausgebildet.

Die US-A-3,465,437 zeigt ein Schälgerät für Früchte mit einem Griff und einem daran befestigten Messer, wobei der Griff mehrerer um seinen Umfang verteilt angeordnete Mulden aufweist und die die Mulden verbindenden Kanten abgerundet sind.

Die US-A-2,073,546 zeigt schließlich ein Schälmesser für Früchte mit einem Handgriff, dessen dem Messer abgewandtes Ende kugelkalottenförmig ausgebildet ist.

Aufgabe der Erfindung ist es, eine Vorrichtung der eingangs genannten Art zu schaffen, die bei einfacher Handhabung die Frucht während des Schälens sicher hält, wodurch die Verletzungsgefahr von Personen verringert wird. Auch soll die Vorrichtung einfach von den verbleibenden Resten der Frucht getrennt und einfach gereinigt werden können.

Diese Aufgabe wird nach der Erfindung durch die im Kennzeichenteil des Patentanspruches 1 angegebenen Merkmale gelöst. Vorteilhafte Ausgestaltungen und Weiterbildungen der Erfindung sind den Unteransprüchen zu entnehmen.

Die Vorrichtung nach der Erfindung wird am Handgriff gehalten und mit dem daran befestigten schraubenartigen Werkzeug mit selbstschneidendem Gewinde zunächst mit dessen konisch spitz zulaufenden freien Ende in Richtung vom Stengel zur Blüte in den Kern hineingedrückt und eingedreht, so daß die Frucht am Kern festgehalten wird. Anschließend läßt sich die Frucht leicht schälen und schneiden. Schließlich wird die Vorrichtung aus dem übriggebliebenen Kern wieder herausgedreht und gereinigt.

Diese Vorrichtung ist damit sehr einfach zu handhaben, sicher im Gebrauch und auch kostengünstig herzustellen. Nach der Erfindung ist das Werkzeug durchgehend konisch ausgebildet, womit man auch bei zähelastischen Kernen einen sicheren Halt erhält. Nach der Erfindung ist die Steigung des selbstschneidenden Gewindes (im Verhältnis zu sonstigen Schraubgewinden) relativ groß und besitzt eine Steigung bzw. Ganghöhe zwischen zwei und fünf Millimeter. Dies begünstigt ein leichtes Eindrehen und einen sicheren Halt im Kern der Frucht.

Weiter sieht die Erfindung vor, daß die Höhe der Gewindeflanken vom freien Ende zum Griff hin zunimmt, was das anfängliche Einschieben und Eindrehen des Werkzeuges erleichtert und bei vollständig eingedrehtem Werkzeug, wenn die griffseitigen Gewindeflanken in Eingriff kommen, den sicheren Halt gewährleistet.

Nach einer Variante der Erfindung trägt das Werkzeug über seine gesamte axiale Länge das Gewinde. Nach einer anderen Variante der Erfindung ist der vordere Abschnitt des Werkzeuges bis etwa maxiaml 1/3 der gesamten axialen Länge des Werkzeuges gewindefrei. Die erste Variante hat etwas bessere Haltekräfte, während die zweite Variante das anfängliche Einführen bzw. Eindrehen des Werkzeuges in den Kern erleichtert.

Nach einer Weiterbildung der Erfindung beträgt die Länge des Werkzeuges 70 mm, so daß es optimal an die gängigen Größen von Mangofrüchten angepaßt ist.

Eine Ausgestaltung der Erfindung liegt darin, daß der Handgriff der Vorrichtung mehrere um den Umfang verteilt angeordnete Mulden aufweist, die auch bei feuchten oder durch Fruchtreste glitschigen Händen eine gute und sichere Handhabung erlauben. Zur Vermeidung von Verletzungsgefahren und zur Verbesserung des guten Griffes, sind die an die Mulden anschließenden Ecken des Handgriffes abgerundet. Weiter ist nach einer Ausgestaltung der Erfindung das dem Werkzeug angewandte Ende des Griffes abgerundet, so daß auch bequem die zum Einführen und Eindrehen des Werkzeuges erforderlichen Axialkräfte von einer Hand aufgebracht werden können.

Nach der Erfindung sind schließlich der Handgriff und das Werkzeug einstückig aus Kunststoff ausgebildet. Beispielsweise kann die Vorrichtung damit mittels Spritzguß hergestellt werden oder die Vorrichtung kann aus einem Kunststoffteil durch spanabhebende oder sonstige bekannte Bearbeitungsverfahren produziert werden. Dadurch, daß auch das Werkzeug aus Kunststoff (und beispielsweise nicht aus Metall) ist, wird auch eine Verletzungsgefahr des Benutzers verringert, da der Kunststoff des Werkzeuges eine höhere Elastizität als Metall hat.

Im folgenden wird die Erfindung anhand eines Ausführungsbeispieles, im Zusammenhang mit der Zeichnung ausführlicher erläutert. Es zeigt:

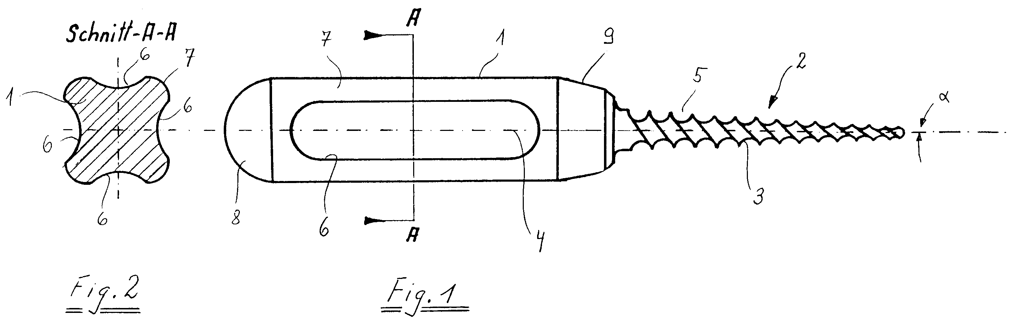

- Fig. 1: eine Seitenansicht einer Vorrichtung nach der Erfindung;
- Fig. 2: einen Schnitt längs der Linie A-A der Fig. 1, d.h. einen Querschnitt des Handgriffes; und
- Fig. 3: eine rein schematische Seitenansicht der Vorrichtung nach der Erfindung während des Gebrauchs.

Die Vorrichtung besitzt einen Handgriff 1 und ein einstückig daran angeformtes schraubenartiges Werkzeug 2, das mit einem selbstschneidenen Gewinde 3 versehen ist. Im dargestellten Ausführungsbeispiel ist das Werkzeug 2 zu seinem freien Ende hin konisch spitz zulaufend, d.h. die Mantelfläche 5 des Werkzeuges bildet mit der Längsachse 4 einen spitzen Winkel α. Weiter ist zu erkennen, daß die Höhe der einzelnen Gewindeflanken am freien Ende des Werkzeuges 2 kleiner ist als am gegenüberliegenden Ende und im wesentlichen linear ansteigt. Bevorzugt ist die Steigung bzw. Ganghöhe des Gewindes, die beispielsweise als Abstand zwischen zwei benachbarten Gewindeflanken gemessen werden kann, in der Größenordnung zwischen zwei und fünf Millimeter.

Obwohl in der Zeichnung nicht dargestellt, kann das freie Ende des Werkzeuges auch glatt, d.h. ohne Gewinde ausgebildet sein, wobei dann das Gewinde 3 erst etwa ab 1/3 der axialen Länge des Werkzeuges 2 beginnt. Die Länge des Werkzeuges 2 beträgt ca. 70 mm.

Der Handgriff 1 ist ein langgestreckter Körper mit einer Länge von ca. 100 mm und einem Durchmesser von ca. 25 mm.

Er besitzt vier regelmäßig um seinen Umfang verteilte Ausnehmungen bzw. muldenförmige Auskerbungen 6. Die diese Auskerbungen 6 verbindenden Eckbereiche bzw. Kanten 7 des Handgriffes sind abgerundet, so daß der Griff 1 insgesamt sehr handlich ist und durch seine Formgebung (vgl. insbesondere den Schnitt der Fig. 2) auch dann noch ergriffen werden kann, wenn die Hand feucht oder durch das Fruchtfleisch glitschig ist.

Das dem Werkzeug 2 abgewandte Ende des Griffes ist kugelkalottenförmig abgerundet, wie mit dem Bezugszeichen 8 angedeutet. Hierdurch kann bequem die für das Einschieben und Eindrehen des Werkzeuges in die Frucht aufzubringende Axialkraft eingeleitet werden.

Das zum Werkzeug 2 weisende Ende des Handgriffes 1 besitzt eine Fase 9, an der sich beim Gebrauch im wesentlichen der Daumen abstützt und die somit ebenfalls für einen besseren Halt in der Hand sorgt.

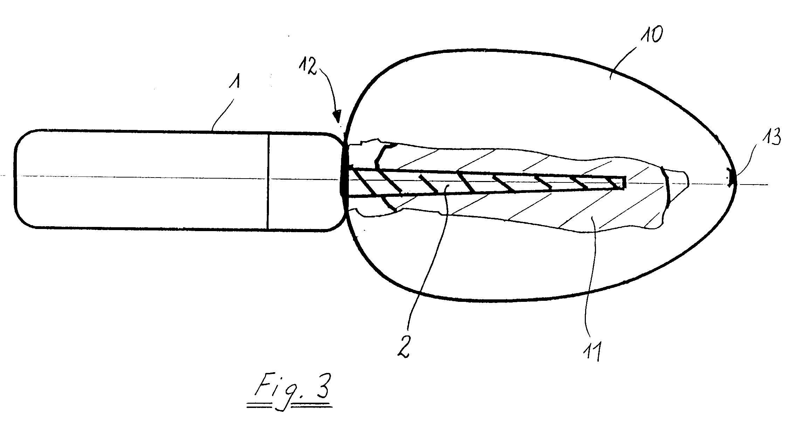

Wie am besten aus Fig. 3 zu erkennen ist, wird das Werkzeug 2 von der Seite des Stengels 12 der Mangofrucht 10 in Richtung zu deren Blüte 13 in den Kern 11 der Frucht einschraubt. Die Frucht 10 kann dann über den Handgriff 1 sicher gehalten werden, so daß das Schälen und Abschneiden des Fruchtfleisches bequem und ohne Verletzungsgefahr möglich ist.

## Patentansprüche

1. Vorrichtung zum Halten von Früchten, insbesondere von Mangofrüchten während des Schälens und Zerkleinerns, mit
einem Handgriff (1) und einem daran angebrachten schraubenartigen Werkzeug (2), dadurch gekennzeichnet, daß das Werkzeug mit einem selbstschneidenden Gewinde (3) versehen ist,
daß das Werkzeug (2) im Bereich seines freien Endes und über seine gesamte axiale Länge durchgehend konisch spitz zulaufend (Winkel α) ausgebildet ist,
daß die Steigung bzw. Ganghöhe des selbstschneidenden Gewindes (3) zwei bis fünf Millimeter beträgt,
daß die Höhe der Gewindeflanken des selbstschneidenden Gewindes (3) vom freien Ende des Werkzeuges (2) in Richtung zum Handgriff (1) hin zunimmt, und daß
der Handgriff (1) und das Werkzeug (2) einstückig aus Kunststoff ausgebildet sind.

2. Vorrichtung nach Anspruch 1, dadurch gekennzeichnet, daß das selbstschneidende Gewinde (3) über die gesamte axiale Länge des Werkzeuges (2) verläuft.

3. Vorrichtung nach Anspruch 1, dadurch gekennzeichnet, daß das vordere Drittel des Werkzeuges gewindefrei ist.

4. Vorrichtung nach einem der Ansprüche 1 bis 3, dadurch gekennzeichnet, daß die Länge des Werkzeuges etwa 70 mm beträgt.

5. Vorrichtung nach einem der Ansprüche 1 bis 4, dadurch gekennzeichnet, daß der Griff (1) mehrere um seinen Umfang verteilt angeordnete Mulden (6) aufweist.

6. Vorrichtung nach Anspruch 5, dadurch gekennzeichnet, daß die die Mulden (6) verbindenden Kanten (7) des Handgriffes abgerundet sind.

7. Vorrichtung nach einem der Ansprüche 1 bis 6, dadurch gekennzeichnet, daß das dem Werkzeug (2) abgewandte Ende des Handgriffes (1) die Form einer Kugelkalotte (8) aufweist.

## Claims

1. Device for holding fruits, particularly mangeos, for peeling and cutting, having a handle (1) and a screw-like tool (2) attached to it, **characterized in**
- that the tool is equipped with a self-cutting screw (3),
- that the tool (2) in the region of its free end and over its entire axial length is continously conical and pointed (angle α),
- that the rise or seams of the self-cutting screw (3) is two to five millimeters,
- that the measurement of the screw ridges of the self-cutting tool screw (3) increases from the free end of the tool (2) to the handle (1), and
- that the handle (1) and the tool (2) are designed as one piece and are made of plastic.

2. Device according to claim 1, **characterized in**
that the self-cutting screw (3) runs along the entire axial length of the tool (2).

3. Device according to claim 1, **characterized in**
that the front third of the tool has no screw.

4. Device according to one of the claims 1 to 3, **characterized in**
that the length of the tool is approximately 70 mm.

5. Device according to claims 1 to 4**, characterized in**
that the handle (1) has several grooves (6) which circumscribe its outer surface.

6. Device according to claim 5, **characterized in**
that the edges (7) which connect the grooves (6) of the handle are rounded.

7. Device according to one of claims 1 to 6, **characterized in**
that the end of the handle (1), which faces in the opposite direction of the tool (2) has the form of a rounded knob (8).

## Revendications

1. Appareil servant à tenir des fruits, notamment des mangues, pour les éplucher et les couper en morceaux, composé
d'un manche (1) surmonté d'un outil en forme de vis (2), caractérisé en ce que ledit outil est pourvu d'un filetage autocoupant (3),
que l'outil (2) près de son bout extérieur et sur toute sa longueur axial, prend la forme pointue d'un cône (angle α),
que la montée ou le pas du filetage autocoupant (3) fait entre 2 et 5 mm,
que la hauteur des bords du filetage autocoupant (3) devient plus importante depuis le bout extérieur de l'outil jusqu'au manche, et que le manche (1) et l'outil (2) sont en matière plastique et forment un seul corps.

2. Appareil selon la revendication 1, caractérisé en ce que le filetage autocoupant (3) s'étend à toute la longueur axiale de l'outil (2).

3. Appareil selon la revendication 1, caractérisé en ce que le premiers tiers de l'outil ne comprend pas de filetage.

4. Appareil selon l'une des revendications 1 à 3, caractérisé en ce que la longueur de l'outil est d'environ 70 mm.

5. Appareil selon l'une des revendications 1 à 4, caractérisé en ce que le manche (1) présente plusiers creux (6) arrangés autour de sa circonférence.

6. Appareil selon la revendication 5, caractérisé en ce que les coins (7) reliant les creux (6) du manche sont arrondis.

7. Appareil selon l'une revendications 1 à 6, caractérisé en ce que le bout du manche (1) opposé à l'outil (2) présente la forme d'une calotte sphérique.
